# EUROPÄISCHE PATENTSCHRIFT

(11) **EP 2 376 401 B1**
(45) Veröffentlichungstag und Bekanntmachung des Hinweises auf die Patenterteilung: **24.10.2012**
(21) Anmeldenummer: 10700225.5
(22) Anmeldetag: 08.01.2010
(51) Int. Cl.: C04B 24/26, C04B 28/02

(54) **FASERHALTIGE BETONZUSAMMENSETZUNGEN**
FIBER-CONTAINING CONCRETE COMPOSITIONS
COMPOSITIONS DE BÉTON À TENEUR EN FIBRES

(30) Priorität: 12.01.2009 DE 102009000142
(43) Veröffentlichungstag der Anmeldung: 19.10.2011
(73) Patentinhaber: Wacker Chemie AG, 81737 München (DE)
(72) Erfinder: SORGER, Klas, 81371 München (DE); BEZLER, Jürgen, 84489 Burghausen (DE); BONIN, Klaus, 84489 Burghausen (DE)
(74) Vertreter: Schuderer, Michael
(86) Internationale Anmeldenummer: PCT/EP2010/050114
(87) Internationale Veröffentlichungsnummer: WO 2010/079199

(56) Entgegenhaltungen:
- EP-A1- 0 431 600
- EP-A1- 0 769 482
- EP-A2- 0 347 092
- WO-A1-2007/106934
- DE-A1- 2 856 764
- DE-A1- 3 110 658
- DE-A1- 19 620 817

## Beschreibung

Die Erfindung betrifft faserhaltige Betonzusammensetzungen und deren Verwendung im Konstruktionsbau, wie beispielsweise im Bereich Minen - oder Tunnelbau, oder zur Herstellung von Industrieböden oder Betonfertigteilen.

Betonzusammensetzungen enthalten hydraulisch abbindende Bindemittel, wie Zement, Füllstoffe, wie Sand oder Kies, und gegebenenfalls weitere Additive. Durch Zugabe von Wasser werden die Betonzusammensetzungen angemacht und in Frischbeton überführt, der dann nach den bekannten Verfahren im Konstruktionsbau eingesetzt werden kann. Abbinden des Frischbetons führt zu Festbeton. Je nach Einsatzgebiet muss der Festbeton ein besonderes Eigenschaftsprofil besitzen. So werden für die Herstellung von Sturzschächten im Bergbau, Industrieböden oder zur Hangsicherung, Tunnelauskleidung und -sicherung besonders hohe Anforderungen an die Abriebbeständigkeit oder Stabilität bei Schlagbeanspruchung von Festbeton gestellt. Um derartige Anforderungen zu erfüllen, wird beispielsweise in der EP-A 32421 faserhaltiger Beton empfohlen. Entsprechende Fasern sind beispielsweise Stahl-, Glas- oder Polyethylenfasern. In der DE-A 1941223 wird mit Stahldraht verstärkter Beton beschrieben.

Allerdings kann durch Zusatz von Fasern alleine nicht die in vielen Anwendungen geforderte Beständigkeit von Beton erreicht werden, selbst wenn der Gehalt an Fasern erhöht wird. Denn bei zunehmendem Gehalt von Fasern nimmt die Verarbeitbarkeit des Frischbetons, wie dessen Pumpbarkeit, ab oder es kommt zu einer inhomogenen Verteilung der Fasern im Frischbeton, sogenannte "Igelbildung", was sich nachteilig auf die Festbetoneigenschaften auswirkt.

In der DE-A 2856764 werden Betonmischungen auf Basis von hydraulisch abbindenden Bindemitteln, Zuschlägen sowie Polymerisaten mit einer Tieftemperaturklebrigkeit, Kunststofffasern und Kunststoff-Formkörpern offenbart. Als Polymerisate wurden im Wesentlichen Homopolymerisate eingesetzt. Die Polymerisate der DE-A 2856764 besitzen eine Tieftemperaturklebrigkeit mit Tₘₐₓ-Werten von kleiner als -8°C (gemessen nach DIN 53445), was einer Glasübergangstemperatur Tg von < -15°C entspricht (gemessen mittels dynamischer Differenzkalorimetrie, DSC). Zum Erreichen dieser Tₘₐₓ-Werte wurden Polymerisate mit kurzer Kettenlänge eingesetzt oder Weichmacher zugesetzt. Derartige Polymerisate führen als Bestandteil von Betonzusammensetzungen schließlich zu Festbeton, der hinsichtlich innerer Kohäsion und Festigkeit noch nicht befriedigt. Zudem können externe Weichmacher aus der Betonmatrix im Laufe der Zeit leicht ausgetragen werden. Insgesamt wird durch diese wesentlichen Merkmale der DE-A 2856764 das Eigenschaftsprofil entsprechender Festbetone limitiert, wie beispielsweise deren Resistenz gegen Abrieb oder Verschleiß, insbesondere bei intensiver Dauerbeanspruchung.

Vor diesem Hintergrund bestand die Aufgabe, faserhaltige Betonzusammensetzungen bereitzustellen, die schließlich zu Festbeton führen, der die vorgenannten Nachteile nicht aufweist, insbesondere sollte der Festbeton auch besonders starken Beanspruchungen, wie Abrieb oder Schlagbeanspruchung, standhalten.

Überraschenderweise wurde diese Aufgabe mit faserhaltigen Betonzusammensetzungen gelöst, die zusätzlich vinylester-Ethylen-Copolymerisate enthielten.

Gegenstand der Erfindung sind faserhaltige Betonzusammensetzungen enthaltend hydraulisch abbindende Bindemittel, 65 bis 90 Gew.-% Füllstoffe aus der Gruppe Kies und Splitt, 0,01 bis 15 Gew.-% von einer oder mehreren Fasern und gegebenenfalls weitere Additive oder Zusätze, dadurch gekennzeichnet, dass
als zusätzliche Komponente 0,1 bis 5,0 Gew.-% an einem oder mehreren Vinylester-Ethylen-Copolymerisaten enthalten sind,
wobei sich die Angaben in Gew.-% jeweils auf 100 Gew.-% Trockenmasse der faserhaltigen Betonzusammensetzungen beziehen.

Die Vinylester-Ethylen-Copolymerisate sind erhältlich durch radikalisch initiierte Polymerisation von
a) einem oder mehreren Vinylestern und
b) Ethylen und gegebenenfalls
c) einem oder mehreren weiteren ethylenisch ungesättigten Comonomeren.

Die Vinylester-Ethylen-Copolymerisate haben vorzugsweise Glasübergangstemperaturen Tg von -15 bis 20°C, besonders bevorzugt von -10 bis 5°C und am meisten bevorzugt von -10 bis 0°C. Die Glasübergangstemperatur kann unter anderem über den Ethylengehalt der Vinylester-Ethylen-Copolymerisate eingestellt werden. Ein höherer Ethylengehalt führt zu einer niedrigeren Glasübergangstemperatur. Vinylester-Ethylen-Copolymerisate mit derartigen Glasübergangstemperaturen sind vorteilhaft für die Herstellung von Festbeton mit besonders hoher Beständigkeit gegen Abrieb, Schlagbeanspruchung und somit geringem Verschleiß.

Ethylen b) wird zur Herstellung der Vinylester-Ethylen-Copolymerisate vorzugsweise zu 5 bis 35 Gew.-%, besonders bevorzugt zu 8 bis 30 Gew.-% und am meisten bevorzugt zu 15 bis 25 Gew.-% eingesetzt, jeweils bezogen auf die Gesamtmasse der insgesamt eingesetzten Monomere zur Herstellung der Vinylester-Ethylen-Copolymerisate.

Für die Vinylester-Ethylen-Copolymerisate geeignete Vinylester a) sind beispielsweise Vinylester von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Vinylester a) werden zur Herstellung der Vinylester-Ethylen-Copolymerisate vorzugsweise zu 50 bis 95 Gew.-%, besonders bevorzugt zu 60 bis 90 Gew.-% und am meisten bevorzugt zu 65 bis 85 Gew.-% eingesetzt, jeweils bezogen auf die Gesamtmasse der insgesamt eingesetzten Monomere zur Herstellung der Vinylester-Ethylen-Copolymerisate.

Als Comonomere c) können ein oder mehrere Monomere ausgewählt werden aus der Gruppe umfassend Methacrylsäureester oder Acrylsäureester mit unverzweigten oder verzweigten Alkoholen mit 1 bis 15 C-Atomen, ethylenisch ungesättigte Silane, Vinylaromaten, Vinylhalogenide Diene und von Ethylen verschiedene Olefine.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Hydroxyethylacrylat. Besonders bevorzugt sind Methylacrylat, Methylmethacrylat, n-Butylacrylat, Hydroxyethylacrylat und 2-Ethylhexylacrylat.

Bevorzugte Diene oder von Ethylen verschiedene Olefine sind Propylen und 1,3-Butadien. Bevorzugte Vinylaromaten sind Styrol und Vinyltoluol. Ein bevorzugtes Vinylhalogenid ist Vinylchlorid.

Die Comonomere c) werden zur Herstellung der Vinylester-Ethylen-Copolymerisate vorzugsweise zu 0 bis 45 Gew.-%, besonders bevorzugt zu 0 bis 25 Gew.-% eingesetzt, jeweils bezogen auf die Gesamtmasse der insgesamt eingesetzten Monomere zur Herstellung der Vinylester-Ethylen-Copolymerisate.

Gegebenenfalls können noch 0,05 bis 5 Gew.-%, vorzugsweise 1 bis 2 Gew.-%, bezogen auf das Gesamtgewicht der Vinylester-Ethylen-Copolymerisate, Hilfsmonomere copolymerisiert werden. Beispiele für Hilfsmonomere sind ethylenisch ungesättigte Carbonsäuren, vorzugsweise Acrylsäure, Methacrylsäure, Crotonsäure, Itaconsäure oder Fumarsäure, Maleinsäure, ethylenisch ungesättigte Carbonsäurenitrile, vorzugsweise Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Beispiele für bevorzugte Copolymerisate sind Copolymerisate von einem oder mehreren Vinylestern mit Ethylen, Copolymerisate von einem oder mehreren Vinylestern mit Ethylen und einem oder mehreren Methacrylsäureestern oder Acrylsäureestern, Copolymerisate von einem oder mehreren Vinylestern mit Ethylen und einer oder mehreren weiteren ethylenisch ungesättigten Carbonsäuren, Copolymerisate von einem oder mehreren Vinylestern mit Ethylen und Vinylchlorid.

Besonders bevorzugt werden Copolymerisate von Vinylacetat mit 8 bis 25 Gew.-% Ethylen; Copolymerisate von Vinylacetat mit 5 bis 25 Gew.-% Ethylen und 1 bis 50 Gew.-% von einem oder mehreren weiteren, von Vinylacetat verschiedenen, Vinyleestern; Copolymerisate von Vinylacetat mit 5 bis 25 Gew.-% Ethylen und 1 bis 45 Gew.-% von einem oder mehreren Methacrylsäureestern oder Acrylsäureestern; Copolymerisate von Vinylacetat mit 5 bis 25 Gew.-% Ethylen und 1 bis 25 Gew.-% von einem oder mehreren weiteren, von Vinylacetat verschiedenen, Vinylestern und 1 bis 45 Gew.-% von einem oder mehreren Methacrylsäureestern oder Acrylsäureestern; Copolymerisate von Vinylacetat mit 1 bis 25 Gew.-% Ethylen und 1 bis 50 Gew.-% von einem oder mehreren ethylenisch ungesättigten Carbonsäuren; wobei die Copolymerisate jeweils noch die genannten Hilfsmonomere in den genannten Mengen enthalten können, und sich die Angaben in Gew.-% auf jeweils 100 Gew.-% aufaddieren.

Durch die Monomerauswahl bzw. durch die Auswahl der Gewichtsanteile der Comonomere resultieren Vinylester-Ethylen-Copolymerisate mit der gewünschten Glasübergangstemperatur Tg. Die Glasübergangstemperatur Tg der Copolymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Copolymerisate erfolgt in wässrigem Medium und bevorzugt nach dem Emulsions- oder Suspensionspolymerisationsverfahren - wie beispielsweise in DE-A 102006007282 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102006007282 beschrieben. Bei Einsatz von Emulgatoren werden vorzugsweise keine anionischen Emulgatoren eingesetzt, da diese im Einzelfall zur Koagulation führen können. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015) eingesetzt. Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymerisate in Form von wässrigen Dispersionen können nach gängigen Trocknungsverfahren zu entsprechenden in Wasser redispergierbaren Pulvern überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Als Fasern sind beispielsweise natürliche, modifizierte natürliche oder künstliche Fasern geeignet. Bevorzugte Fasern sind Stahlfasern, Glasfasern, Carbonfasern oder Fasern aus Polypropylen, Polyethylen, Polyvinylalkohol, Polyacrylnitril, Polyester, Polyamid oder auch Cellulosefasern oder modifizierte Cellulosefasern. Besonders bevorzugt sind Stahlfasern, Polyvinylalkohol- oder Polypropylenfasern. Am meisten bevorzugt sind Stahlfasern. Es können auch Mischungen von mehreren Fasern eingesetzt werden. Die Fasern können in Form von losen Fasern, bündelweise verklebten Fasern, fibrillierten Fasern, mulitfilamenten Fasern oder Fasern in Dosierverpackung eingesetzt werden.

Als Stahlfasern können die gängigen Blech-, Draht-, Span- oder vorzugsweise kaltgezogenen Stahldrahtfasern eingesetzt werden. Das Material der Stahlfasern ist üblicherweise Baustahl, nichtrostender Stahl oder verzinkter Stahl. Die Stahlfasern können eine glatte oder profilierte Oberfläche aufweisen und gegebenenfalls mit Endhaken und mit zusätzlicher Prägung versehen sein. Es können gefräste Stahlfasern mit sichelförmige Querschnitt, in der Längsachse tordiert, Drahtfasern, gebogen und geschnitten oder gestanzt, Blechfasern, gegebenenfalls mit Prägungen zur Verbesserung des Verbunds versehen, eingesetzt werden. Die Stahlfasern können eine konstruktive Bewehrung ersetzen. Die Fasern haben üblicherweise eine Länge von 5 bis 100 mm, insbesondere von 10 bis 60 mm.

Gängige hydraulisch abbindende Bindemittel sind Zement, insbesondere Portlandzement, Aluminatzement, Trasszement, Hüttenzement, Magnesiazement, Phosphatzement oder Hochofenzement; sowie Mischzemente (Kompositzemente).

Typische Rezepturen der faserhaltigen Betonzusammensetzungen enthalten 9 bis 40 Gew.-%, insbesondere 12 bis 25 Gew.-% Zement, bevorzugt Portlandzement CEM I, Portlandhüttenzement CEM II/A-S, CEM II/B-S oder Hochofenzement CEM III/A, CEM III/B. Vinylester-Ethylen-Copolymerisate werden zu 0,1 bis 5,0 Gew.-%, bevorzugt zu 0,2 bis 2,0 Gew.-%, besonders bevorzugt von 0,4 bis 1,5 Gew.-% eingesetzt, jeweils vorzugsweise in Form von wässrigen Dispersion mit einem Feststoffgehalt von 10 bis 75 Gew.-%, besonders bevorzugt von 40 bis 60 Gew.-%. Fasern sind zu 0,01 bis 15 Gew.-%, besonders bevorzugt zu 0,1 bis 5 Gew.-% enthalten, wobei im Falle von Stahlfasern am meisten bevorzugt 0,5 bis 5 Gew.-%, und im Falle von Kunststoffasern am meisten bevorzugt 0,05 bis 2 Gew.-% enthalten sind. Ein weiterer Bestandteil sind 65 bis 90 Gew.-% Füllstoffe aus der Gruppe Kies und Splitt. Soweit nicht anders angegeben beziehen sich die Angaben in Gew.-% jeweils auf 100 Gew.-% Trockenmasse der Rezeptur. Zur Herstellung der wässrigen faserhaltigen Betonzusammensetzungen werden üblicherweise zusätzlich 20 bis 90 Gew.-%, besonders bevorzugt 30 bis 80 Gew.-% und am meisten bevorzugt 40 bis 65 Gew.-% Wasser, bezogen auf die Gesamtmasse des eingesetzten Zements, eingesetzt.

Werden die faserhaltigen Betonzusammensetzungen nach den gängigen Nass- oder Trockenspritzverfahren verarbeitet, so werden als Additiv üblicherweise Abbindebeschleuniger zu 3 bis 10 Gew.-%, bezogen auf den Zementgehalt der faserhaltigen Betonzusammensetzung, eingesetzt. Beispiele für Abbindebeschleuniger sind Aluminiumverbindungen, Silikate, Alkalihydroxide oder Carbonate. Bevorzugte Abbindebeschleuniger sind Aluminiumsalze, Aluminate, Alkalisilikate, wie beispielsweise Wasserglas, Alkalicarbonate oder Kaliumhydroxid.

Die anwendungstechnischen Eigenschaften der faserhaltigen Betonzusammensetzungen können durch weitere Zusatzmittel verbessert werden. In bevorzugten Ausführungsformen enthaltene Zusatzmittel sind beispielsweise 0,2 bis 2 Gew.-%, bevorzugt 0,2 bis 1,5 Gew.-% und besonders bevorzugt 0,4 bis 1,0 Gew.-%, bezogen auf Zement, Betonverflüssiger (dem Fachmann auch bekannt als Fließmittel), oder Pigmente, Schaumstabilisatoren, Hydrophobierungsmittel, Weichmacher, Flugasche, disperse Kieselsäure, Luftporenmittel zur Steuerung der Betonrohdichte oder Pumpenhilfsmittel zur Verbesserung der Pumpbarkeit. Des Weiteren können den faserhaltigen Betonzusammensetzungen gegebenenfalls Additive zugesetzt werden, die den abbindebeschleunigenden Effekt der Abbindebeschleuniger auf die Nassbetonmischungen modulieren, wie beispielsweise Phosphorsäure, Phosphonsäuren, Polyphosphat, Polyhydroxycarbonsäuren oder organische Additive, insbesondere Polyacrylsäure, Hexamethylentetraamin, Alkanolamine wie beispielsweise Diethanolamin (DEA) oder Triethanolamin.

Die Herstellung der faserhaltigen Betonzusammensetzungen aus den einzelnen Bestandteilen der Rezeptur ist an keine besondere Vorgehensweise oder Mischvorrichtung gebunden. Die einzelnen Bestandteile können beim Mischen in trockener Form oder gegebenenfalls in wässriger Form eingesetzt werden. Das Mischen kann beispielsweise in einem Betonmischer oder einem Fertigbetonmischwerk erfolgen. Die faserhaltigen Betonzusammensetzungen können in Form von trockenen oder wässrigen Mischungen vorliegen.

Die faserhaltigen Betonzusammensetzungen können nach den gängigen Verfahren zur Verarbeitung von Betonmischungen appliziert werden, wie beispielsweise dem Nassspritzbeton-, Trockenspritzbeton- oder Hand-Verfahren. Bei Einsatz von Spritzbetonverfahren können die bekannten Vorrichtungen wie beispielsweise Spritzroboter oder Spritzmaschinen eingesetzt werden.

Die Schichtdicke des Festbetons ist vorzugsweise ≥ 5 cm, besonders bevorzugt ≥ 15 cm.

Mit den erfindungsgemäßen faserhaltigen Betonzusammensetzungen werden sowohl Festbeton wie auch Frischbeton mit besonders vorteilhaften Eigenschaften erhalten.

So weist erfindungsgemäß modifizierter Festbeton gegenüber herkömmlichem Festbeton beispielsweise eine verbesserte Biegezugfestigkeit auf, was sich in einer höheren Duktilität des Festbetons äußert und zu einem erhöhten Widerstand gegen Schlagbeanspruchung, Abrieb und Verschleiß führt sowie einem Sprödbruchversagen vorbeugt. Überraschenderweise ist die Druckfestigkeit des erfindungsgemäß hergestellten Festbetons trotz des Ethylen-Bestandteils der Vinylester-Copolymerisate auf gleichem Niveau wie die Druckfestigkeit von herkömmlichem Festbeton. Die Vinylester-Ethylen-Copolymerisate führen auch zu einer besseren Dispergierung der Fasern im Frischbeton, so dass eine "Igelbildung" unterbunden werden kann und der Festbeton gegen Beanspruchungen robuster wird. Eine weitere, ansonsten übliche Nachbehandlung oder Vergütung der Betonoberfläche zur Herstellung spezieller, gegen Abrieb beständige dünne Oberflächenschichten, wie beispielsweise Coating mit Expoxidharz-Mörteln oder spezielle Inhaltstoffe enthaltenden zementären Mörteln, ist erfindungsgemäß nicht erforderlich. Mit den erfindungsgemäßen Betonzusammensetzungen wird somit auf kostengünstige Weise robuster Festbeton erhalten.

Aber auch die Frischbetoneigenschaften von faserhaltigen Betonzusammensetzungen werden durch die erfindungsgemäßen Vinylester-Ethylen-Mischpolymerisate vorteilhaft verbessert, beispielsweise die Verarbeitbarkeit, das Ausbreitmaß oder die Pumpbarkeit. Auf Grund ihres Ethylen-Bestandteils sind die Vinylester-Ethylen-Copolymerisate intern plastifiziert und wirken auf Frischbeton überraschenderweise verflüssigend, was sich im Ausbreitmaß von Frischbeton äußert. So zeigt herkömmlicher, faserhaltiger Frischbeton im Vergleich zu entsprechendem faserfreiem Frischbeton ein geringeres Ausbreitmaß. Dieser Nachteil äußert sich insbesondere bei Kunststoffasern, wie Polypropylen- und Polyvinylalkoholfasern, aber auch bei Stahlfasern. Durch Einsatz der erfindungsgemäßen faserhaltigen Betonzusammensetzungen wird Frischbeton erhalten, der gegenüber herkömmlichem, faserhaltigem Frischbeton ein höheres Ausbreitmaß aufweist. Die erfindungsgemäßen faserhaltigen Betonzusammensetzungen sind im Vergleich zu herkömmlichem, faserhaltigem Frischbeton auch besser pumpbar.

Die faserhaltigen Betonzusammensetzungen eignen sich für alle gängigen Anwendungen von Beton, insbesondere für die Herstellung von Industrieböden, Betonstraßen, Bodenplatten, Wänden, wie Kellerwänden, Rammpfählen oder Betonfertigteilen, wie Betonrohren, Betonplatten (z.B. für Garagen), Elementwände, zur Hangsicherung, für Tunnel- (wie z.B. Tunnelauskleidung oder Tübbinge) oder Minenanwendungen (z.B. Sturzschächte).

Die folgenden Beispiele dienen der detaillierten Erläuterung der Erfindung und sind in keiner Weise als Einschränkung zu verstehen.

### Herstellung der faserhaltigen Betonzusammensetzungen

Komponenten zur Herstellung der faserhaltigen Betonzusammensetzungen: Portland-Zement (CEM II A-S 42,5 R)
Kies 0-8 mm (die Sieblinie B16 wurde über ein 8 mm Sieb abgesiebt) Wasser-Zement-Wert w/z = 0.55

Copolymerisate:
- Polymer 1:
   Mit Polyvinylalkohol stabilisierte wässrige 52,8 Gew.-%-ige Dispersion eines Vinylacetat-Ethylen-Copolymerisats (Ethylengehalt: 21 Gew.-%, bezogen auf das Gesamtgewicht des Polymers) mit einer Glasübergangstemperatur von -7°C.
- Polymer 2:
   Mit Polyvinylalkohol stabilisierte wässrige 58,4 Gew.-%-ige Dispersion eines Vinylacetat-Ethylen-Copolymerisats (Ethylengehalt: 9 Gew.-%, bezogen auf das Gesamtgewicht des Polymers) mit einer Glasübergangstemperatur von +15°C.

Fasern:
Stahlfaser der Firma Baumbach, WLS-30/0,75 H/Zn
Polypropylenfaser der Firma STW, grob (18 mm)
Polyvinylalkoholfaser der Firma Kuraray, RFS 400x18 (18 mm)

Die Zusammensetzung der jeweiligen faserhaltigen Betonzusammensetzung ist in Tabelle 1 angegeben.

Zur Herstellung der jeweiligen faserhaltigen Betonzusammensetzung wurden Zement, Kies und gegebenenfalls Fasern in einem Zwangsmischer einige Sekunden zu einer Trockenmischung vorgemischt. Anschließend wurden Wasser und gegebenenfalls die jeweilige Polymerdispersion zugegeben. Es wurde für weitere 2 Minuten gemisch. Es folgte eine Ruhezeit von 5 Minuten, bevor noch einmal für 2 Minuten aufgemischt wurde.
Bei Einsatz von Stahlfasern wurden diese bei der Herstellung der Trockenmischung vorgelegt. Bei Einsatz von Polypropylen- und Polyvinylakoholfasern wurden diese zusammen mit dem Anmachwasser zugegeben.

### Herstellung der Probekörper

Von jeder Mischung wurden drei Probekörper (Abmessungen: 40 mm Höhe, 40 mm Breite, 160 mm Länge) gemäß DIN EN 196-1 (2005) hergestellt. Hierzu wurde der Beton in Stahlschalungen eingebracht und eine Minute auf dem Rütteltisch verdichtet.
Die Stahlschalungen wurden mit Folie abgedeckt und 24 Stunden bis zum Ausschalen im Klimaraum (23 °C / 50% r.F.) gelagert. Nach dem Ausschalen wurden die Probekörper bis zum Alter von 7 Tagen mit Plastikfolie abgedeckt und im Normklima (23 °C / 50% r.F.) gelagert. Anschließend wurde die Plastikfolie entfernt und die Probekörper bis zum Alter von 28 Tagen im Normklima (23 °C / 50% r.F.) gelagert.

### Bestimmung der Frisch- und Fastbetaneigenschaften

Das Ausbreitmaß der Frischbetonmischungen wurde nach EN 12350-5 bzw. gemäß DIN EN 1015-3 ermittelt.
Biegezugfestigkeit (BZF) und Druckfestigkeit (DF) wurden nach DIN 1048-5 bzw. gemäß DIN 12808-3 bestimmt (Dreipunkt-Biegezugversuch, Belastung durch Einzellast in der Mitte der Probekörper; Druckfestigkeit der bei der Biegung gebrochenen Probekörperhälften).
Frisch- und Festbetoneigenschaften der Betonmischungen sind in Tabelle 1 angegeben.

### Austestung

Die Prüfung des Verschleißwiderstandes erfolgte nach dem Los Angeles-Verfahren DIN EN 1097-2 (1998). Als Test-Apparatur diente eine Hohltrommel (Innendurchmesser: 245 mm, Innenlänge: 300 mm) mit zwei im Innenraum angebrachten, gegenüberliegenden rechteckigen Mitnehmerleisten (Länge: 300 mm, Breite: 35 mm). Die Hohltrommel rotierte um eine horizontale Achse (angetrieben durch zwei Gummiwalzen). Die Drehgeschwindigkeit der Hohltrommel betrug 29 min⁻¹.
Die Kugelladung bestand aus zehn Stahlkugeln mit einem Durchmesser von 50 mm und einen Gewicht von 0,508 kg (Gesamtgewicht: 5,08 kg).

Das Gesamtgewicht von drei mit Druckluft gereinigten Probekörpern wurde unmittelbar vor der Messung bestimmt. Die drei Probekörper wurden mit 10 Stahlkugeln in die Hohltrommel gegeben. Nach 500 Umdrehungen wurden die Probekörper entnommen, mit Druckluft gereinigt und das Gesamtgewicht der Probekörper ermittelt.

Der Abrieb der drei Probekörper ergab sich als Differenz vom Gesamtgewicht vor der Messung und Gesamtgewicht nach 500 Umdrehungen. Die Ergebnisse sind in Tabelle 1 aufgeführt.

Aus Tabelle 1 geht hervor, dass erfindungsgemäß ein höheres Ausbreitmaß erreicht wird (Einträge 3 und 6 bzw. 2, 4 und 5). Ebenso wird durch Einsatz der Vinylester-Ethylen-Copolymerisate die Biegezugfestigkeit (BZF) verbessert (Einträge 2 und 5 bzw. 3 und 6).
Besonders gute Ergebnisse werden mit der Polymerdispersion 1 ersielt, dessen Copolymerisat im Vergleich zu Polymerdispersion einen höheren Ethylengehalt hat.
Überraschenderweise ist die Druckfestigkeit des erfindungsgemäß hergestellten Festbetons trotz des Ethylen-Bestandteils der Vinylestern-Copolymerisate auf gleichem Niveau wie die Druckfestigkeit von herkömmlichem Festbeton.

**Tabelle 1:**

| **Eintrag** | | **1** | **2** | **3** | **4** | **5** | **6** | **7** | **8** | **9** |
|---|---|---|---|---|---|---|---|---|---|---|
| Einwaagen bezogen auf 1 m³ | | | | | | | | | | |
| CEM II-AS 42,5 R | [kg] | 370,00 | 370,00 | 370,00 | 370,00 | 370,00 | 370,00 | 370,00 | 370, 00 | 370,00 |
| Wasser | [kg] | 203,50 | 203,50 | 203,50 | 186,94 | 170,38 | 170,38 | 170,38 | 190,32 | 177,14 |
| Polymerdispersion 1 | [kg] | | | | 35,06 | 70,12 | 70,12 | 70,12 | | |
| Polymerdispersion 2 | [kg] | | | | | | | | 31, 68 | 63,36 |
| Stahlfaser | [kg] | | 40,00 | | 40,00 | 40,00 | | | 40,00 | 40,00 |
| Polypropylenfaser | [kg] | | | 2,73 | | | 2,73 | | | |
| PVOH-Faser | [kg] | | | | | | | 3,90 | | |
| B-16 Kies, abgesiebt | [kg] | 1704,39 | 1690,87 | 1696,44 | 1641,86 | 1592,84 | 1598,39 | 1598,39 | 1641,86 | 1592,84 |
| Summe | [kg] | 2277,89 | 2304,37 | 2272,67 | 2273,86 | 2243,34 | 2211,62 | 2212,79 | 2273,86 | 2243,34 |
| Frischbetoneigenschaften | | | | | | | | | | |
| Ausbreitmaß | [cm] | 13,7 | 13,4 | 11,5 | 14,1 | 16,0 | 13,9 | 15,1 | 12,3 | 11,8 |
| Festbetoneigenschaften | | | | | | | | | | |
| BZF (Mittelwert) | (N/mm²] | 7,96 | 8,24 | 8,08 | 8,96 | 9,73 | 9,67 | 9,65 | 8,22 | 9,47 |
| DF (Mittelwert) | [N/mm²] | 42,19 | 44,06 | 34,11 | 42,20 | 43,54 | 34,44 | 39,88 | 37,80 | 34,28 |
| Abriebtest | | | | | | | | | | |
| Abrieb | [kg] | 50,50 | 46,60 | 44,10 | 38,80 | 27,60 | 26,20 | 25,00 | 40,60 | 31,50 |

## Patentansprüche

1. Faserhaltige Betonzusammensetzungen enthaltend hydraulisch abbindende Bindemittel, 65 bis 90 Gew.-% Füllstoffe aus der Gruppe Kies und Splitt, 0,01 bis 15 Gew.-% von einer oder mehreren Fasern und gegebenenfalls weitere Additive oder Zusätze, **dadurch gekennzeichnet, dass**
als zusätzliche Komponente 0,1 bis 5,0 Gew.-% an einem oder mehreren Vinylester-Ethylen-Copolymerisaten enthalten sind,
wobei sich die Angaben in Gew.-% jeweils auf 100 Gew.-% Trockenmasse der faserhaltigen Betonzusammensetzungen beziehen.

2. Faserhaltige Betonzusammensetzungen nach Anspruch 1, **dadurch gekennzeichnet, dass** die Vinylester-Ethylen-Copolymerisate erhältlich sind durch radikalisch initiierte Polymerisation von
a) einem oder mehreren Vinylestern und
b) Ethylen und gegebenenfalls
c) einem oder mehreren weiteren ethylenisch ungesättigten Comonomeren.

3. Faserhaltige Betonzusammensetzungen nach Anspruch 1 oder 2, **dadurch gekennzeichnet, dass** die Vinylester-Ethylen-Copolymerisate vorzugsweise 5 bis 35 Gew.-% Ethylen enthalten, bezogen auf die Gesamtmasse der Vinylester-Ethylen-Copolymerisate.

4. Faserhaltige Betonzusammensetzungen nach Anspruch 1 bis 3, **dadurch gekennzeichnet, dass** die Vinylester-Ethylen-Copolymerisate Glasübergangstemperaturen Tg von -15 bis 20°C haben.

5. Faserhaltige Betonzusammensetzungen nach Anspruch 1 bis 4, **dadurch gekennzeichnet, dass** als Vinylester a) Vinylester von Carbonsäuren mit 1 bis 15 C-Atomen eingesetzt werden.

6. Faserhaltige Betonzusammensetzungen nach Anspruch 1 bis 5, **dadurch gekennzeichnet, dass** die Vinylester a) ausgewählt werden aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen.

7. Faserhaltige Betonzusammensetzungen nach Anspruch 1 bis 6, **dadurch gekennzeichnet, dass** als Vinylester-Ethylen-Copolymerisate ein oder mehrere Copolymerisate eingesetzt werden aus der Gruppe umfassend Copolymerisate von einem oder mehreren Vinylestern mit Ethylen, Copolymerisate von einem oder mehreren Vinylestern mit Ethylen und einem oder mehreren Methacrylsäureestern oder Acrylsäureestern, Copolymerisate von einem oder mehreren Vinylestern mit Ethylen und einer oder mehreren ethylenisch ungesättigten Carbonsäuren, Copolymerisate von einem oder mehreren Vinylestern mit Ethylen und Vinylchlorid.

8. Faserhaltige Betonzusammensetzungen nach Anspruch 1 bis 7, **dadurch gekennzeichnet, dass** als Fasern natürliche, modifizierte natürliche oder künstliche Fasern eingesetzt werden.

9. Faserhaltige Betonzusammensetzungen nach Anspruch 1 bis 8, **dadurch gekennzeichnet, dass** die Fasern ausgewählt werden aus der Gruppe umfassend Stahlfasern, Glasfasern, Carbonfasern und Fasern aus Polypropylen, Polyethylen, Polyvinylalkohol, Polyacrylnitril, Polyester, Polyamid und Cellulosefasern und modifizierte Cellulosefasern.

10. Verwendung der faserhaltigen Betonzusammensetzungen aus Anspruch 1 bis 9 für die Herstellung von Festbeton mit Schichtdicken von 5 cm.

11. Verwendung der faserhaltigen Betonzusammensetzungen nach Anspruch 10 für die Herstellung von Industrieböden, Betonstraßen, Bodenplatten, Wänden, Rammpfählen, Betonfertigteilen, Betonplatten, Elementwänden oder zur Hangsicherung oder im Tunnel- oder Minenbau.

## Claims

1. Fiber-containing concrete compositions containing hydraulically setting binders, 65 to 90 wt% of fillers from the group comprising gravel and chippings, 0.01 to 15 wt% of one or more fibers and if appropriate further additives or aggregates, **characterized in that** 0.1 to 5.0 wt% of one or more vinyl ester-ethylene copolymers are contained as an additional component, wherein the statements in wt% each relate to 100 wt% dry mass of the fiber-containing concrete compositions.

2. Fiber-containing concrete compositions according to Claim 1, **characterized in that** the vinyl ester-ethylene copolymers are obtainable by radical-initiated polymerization of
a) one or more vinyl esters and
b) ethylene and if appropriate
c) one or more further ethylenically unsaturated comonomers.

3. Fiber-containing concrete compositions according to Claim 1 or 2, **characterized in that** the vinyl ester-ethylene copolymers preferably contain 5 to 35 wt% of ethylene, based on the total mass of the vinyl ester-ethylene copolymers.

4. Fiber-containing concrete compositions according to Claims 1 to 3, **characterized in that** the vinyl ester-ethylene copolymers have glass transition temperatures Tg from -15 to 20°C.

5. Fiber-containing concrete compositions according to Claims 1 to 4, **characterized in that** as vinyl esters a) vinyl esters of carboxylic acids with 1 to 15 C atoms are used.

6. Fiber-containing concrete compositions according to Claims 1 to 5, **characterized in that** the vinyl esters a) are selected from the group comprising vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids with 5 to 13 C atoms.

7. Fiber-containing concrete compositions according to Claims 1 to 6, **characterized in that** as vinyl ester-ethylene copolymers one or more copolymers are used from the group comprising copolymers of one or more vinyl esters with ethylene, copolymers of one or more vinyl esters with ethylene and one or more methacrylate esters or acrylate esters, and copolymers of one or more vinyl esters with ethylene and one or more ethylenically unsaturated carboxylic acids and copolymers of one or vinyl esters with ethylene and vinyl chloride.

8. Fiber-containing concrete compositions according to Claims 1 to 7, **characterized in that** as fibers natural, modified natural or artificial fibers are used.

9. Fiber-containing concrete compositions according to Claims 1 to 8, **characterized in that** the fibers are selected from the group comprising steel fibers, glass fibers, carbon fibers and fibers of poly-propylene, polyethylene, polyvinyl alcohol, polyacrylo-nitrile, polyester, polyamide and cellulose fibers and modified cellulose fibers.

10. Use of the fiber-containing concrete compositions according to Claims 1 to 9 for the production of solid concrete with layer thicknesses of ≥ 5 cm.

11. Use of the fiber-containing concrete compositions according to Claim 10 for the production of industrial floors, concrete roads, floor slabs, walls, ram piles, finished concrete parts, concrete slabs, prefabricated walls, or for slope stabilization or in tunneling or mining.

## Revendications

1. Compositions de béton contenant des fibres, contenant des liants à prise hydraulique, 65 à 90 % en poids de charges du groupe constitué par le gravier et les gravillons, 0,01 à 15 % en poids d'une ou de plusieurs fibres et éventuellement d'autres additifs ou ajouts, **caractérisées en ce que**
0,1 à 5,0 % en poids d'un ou de plusieurs copolymères ester de vinyle-éthylène sont contenus en tant que composant supplémentaire,
les données en % en poids se rapportant à chaque fois à 100 % en poids de masse sèche des compositions de béton contenant des fibres.

2. Compositions de béton contenant des fibres selon la revendication 1, **caractérisées en ce que** les copolymères ester de vinyle-éthylène peuvent être obtenus par polymérisation initiée par voie radicalaire de
a) un ou plusieurs esters de vinyle et
b) de l'éthylène et éventuellement
c) un ou plusieurs comonomères éthyléniquement insaturés supplémentaires.

3. Compositions de béton contenant des fibres selon la revendication 1 ou 2, **caractérisées en ce que** les copolymères ester de vinyle-éthylène contiennent de préférence 5 à 35 % en poids d'éthylène, par rapport à la masse totale des copolymères ester de vinyle-éthylène.

4. Compositions de béton contenant des fibres selon les revendications 1 à 3, **caractérisées en ce que** les copolymères ester de vinyle-éthylène ont des températures de transition vitreuse Tg de -15 à 20 °C.

5. Compositions de béton contenant des fibres selon les revendications 1 à 4, **caractérisées en ce que** des esters de vinyle d'acides carboxyliques contenant 1 à 15 atomes C sont utilisés en tant qu'esters de vinyle a).

6. Compositions de béton contenant des fibres selon les revendications 1 à 5, **caractérisées en ce que** les esters de vinyle a) sont choisis dans le groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et les esters de vinyle d'acides monocarboxyliques alpha-ramifiés contenant 5 à 13 atomes C.

7. Compositions de béton contenant des fibres selon les revendications 1 à 6, **caractérisées en ce qu'**un ou plusieurs copolymères du groupe comprenant les copolymères d'un ou de plusieurs esters de vinyle avec de l'éthylène, les copolymères d'un ou de plusieurs esters de vinyle avec de l'éthylène et un ou plusieurs esters de l'acide méthacrylique ou esters de l'acide acrylique, les copolymères d'un ou de plusieurs esters de vinyle avec de l'éthylène et un ou plusieurs acides carboxyliques éthyléniquement insaturés, les copolymères d'un ou de plusieurs esters de vinyle avec de l'éthylène et du chlorure de vinyle sont utilisés en tant que copolymères ester de vinyle-éthylène.

8. Compositions de béton contenant des fibres selon les revendications 1 à 7, **caractérisées en ce que** des fibres naturelles, naturelles modifiées ou synthétiques sont utilisées en tant que fibres.

9. Compositions de béton contenant des fibres selon les revendications 1 à 8, **caractérisées en ce que** les fibres sont choisies dans le groupe comprenant les fibres d'acier, les fibres de verre, les fibres de carbone et les fibres de polypropylène, polyéthylène, alcool polyvinylique, polyacrylonitrile, polyester, polyamide et les fibres de cellulose et les fibres de cellulose modifiées.

10. Utilisation des compositions de béton contenant des fibres selon les revendications 1 à 9 pour la fabrication de béton durci ayant des épaisseurs de couche ≥ 5 cm.

11. Utilisation des compositions de béton contenant des fibres selon la revendication 10 pour la fabrication de sols industriels, de routes en béton, de dalles, de murs, de pieux battus, d'éléments préfabriqués en béton, de plaques en béton, de murs élémentaires ou pour le renforcement de pentes ou dans la construction de tunnels ou de mines.
